# EUROPEAN PATENT APPLICATION

(11) **EP 3 450 906 A1**
(43) Date of publication of application: **06.03.2019**
(21) Application number: 18175909.3
(22) Date of filing: 05.06.2018
(51) Int. Cl.: G01B 5/00, G01B 3/18, G01B 5/02

(54) **BAR LENGTH DETECTION TOOL AND METHOD FOR DETECTING BAR LENGTH**

(30) Priority: 30.08.2017 CN 201721102221 U
(71) Applicant: Miasolé Equipment Integration (Fujian) Co., Ltd., 362005 Quanzhou Fujian (CN)
(72) Inventor: Wu, Fuzhong, Fujian, Fujian 362005 (CN); Huang, Xi´nan, Fujian, Fujian 362005 (CN); Lei, Guixian, Fujian, Fujian 362005 (CN); Chen, Jindao, Fujian, Fujian 362005 (CN); Wang, Xiutao, Fujian, Fujian 362005 (CN); Lan, Bangyin, Fujian, Fujian 362005 (CN); Cai, Ailing, Fujian, Fujian 362005 (CN)
(74) Representative: Cohausz & Florack

(57) **Abstract**

A bar length detection tool and a method for detecting a length of a bar (14) are provided, the bar length detection tool comprises: a substrate (1), a first bearing seat (2) and a second bearing seat (2') oppositely disposed on the substrate (1), and a micrometer (3); wherein a positioning device (5) is rotatably connected to the first bearing seat (2), a mounting plate (6) is rotatably connected to the second bearing seat (2'), and the first bearing seat (2) and the second bearing seat (2') are each provided with at least two needle bearings (12).

## Description

### CROSS-REFERENCE TO RELATED APPLICATION

This application claims the priority of Chinese Patent Application No. 201721102221.5 filed on August 30, 2017, which is hereby incorporated by reference in its entirety.

### TECHNICAL FIELD

The present disclosure relates to a detection tool and a detection method. In particular, the present disclosure relates to a bar length detection tool and a method for detecting a length of a bar.

### BACKGROUND OF THE INVENTION

Target is an important part in magnetron sputtering technology and serves as a target material hit by high speed charged particles. Different membrane systems can be obtained by using different targets.

Since coating equipment has high requirements on the dimensional precision of the target, if the size of the target does not meet the requirements, it cannot be installed and used normally. Therefore, after each target is produced, the length of the target needs to be detected.

For small-sized targets, detection is comparatively easy. For targets of a length larger than 1000 mm, no dedicated detection device is available. When detecting a large-sized bar, the bar cannot be readily and reliably placed in the existing length measurement tool due to a large length, leading to inaccurate detection results. That is, the existing length detection tool cannot perform precise measurement.

In addition to targets, there is still a large number of other large-sized bars demand higher size precision, thus a dedicated detection tool developed for bars is in urgent need.

### SUMMARY

The present disclosure has been accomplished in order to at least partially solve the technical problems in the prior art. The present disclosure provides a bar length detection tool and a method for detecting a length of a bar that are capable of detecting a length of a bar by using a simple structure with high detection precision.

According to an aspect of the present disclosure, there is provided a bar length detection tool, comprising: a substrate, a first bearing seat and a second bearing seat oppositely disposed on the substrate, and a micrometer; wherein a positioning device is rotatably connected to the first bearing seat, a mounting plate is rotatably connected to the second bearing seat, and the first bearing seat and the second bearing seat are each provided with at least two needle bearings.

In one exemplary embodiment, the mounting plate may be connected to the micrometer.

In one exemplary embodiment, the positioning device may include a connecting element rotatably mounted on an outside surface of the first bearing seat, and a positioning element fixedly connected to the connecting element and located at a side of the connecting element facing the second bearing seat.

In one exemplary embodiment, the bar length detection tool may further include a guide rod, the first bearing seat having a first through hole, the second bearing seat having a second through hole, the first through hole and the second through hole being coaxially arranged, the guide rod being rotatably inserted into the first through hole and the second through hole, one end of the guide rod being fixedly connected to the connection element, and the other end of the guide rod being fixedly connected to the mounting plate.

In one exemplary embodiment, the mounting plate may have a mounting hole for insertion of the micrometer.

In one exemplary embodiment, the positioning element may be on the same straight line as an axis of the mounting hole.

In one exemplary embodiment, the mounting hole may be a step hole with one side having a larger hole diameter located at a side of the mounting plate facing away the mounting plate.

In one exemplary embodiment, the bar length detection tool may further comprise a calibration bar, a first bracket disposed on the first bearing seat and a second bracket disposed on the second bearing seat, and two ends of the calibration bar being provided inside the first bracket and the second bracket, respectively.

In one exemplary embodiment, the first bracket and the second bracket may both be arc-shaped grooves.

In one exemplary embodiment, the at least two needle bearings may be provided inside the first bracket and the second bracket.

According another aspect of the present disclosure, there is provided a method for detecting a length of a bar with a bar length detection tool, the bar length detection tool comprising: a substrate, a first bearing seat and a second bearing seat oppositely disposed on the substrate and provided with a first bracket and a second bracket, respectively, a micrometer, and a calibration bar; wherein a positioning device is rotatably connected to the first bearing seat, a mounting plate is rotatably connected to the second bearing seat, and the first bearing seat and the second bearing seat are each provided with at least two needle bearings, the method includes: disposing two ends of the calibration bar inside the first bracket and the second bracket, respectively, and after positioning one end of the calibration bar with the positioning device, adjusting the micrometer such that the micrometer comes into contact with the other end of the calibration bar, so as to reset the micrometer; and releasing the micrometer, removing the calibration bar, and disposing the two ends of the bar inside the first bracket and the second bracket, respectively, after positioning one end of the bar with the positioning device, bringing the micrometer into contact with the other end of the bar and reading a count of the micrometer, and adding a length of the calibration bar to or subtracting the length of the calibration bar from the obtained count, so as to obtain a length of the bar.

In one exemplary embodiment, the positioning device may comprises a connecting element fixed to an outside surface of the first bearing seat, and a positioning element rotatably connected to the connecting element and located at a side of the connecting element facing the second bearing seat, and the method may further comprise: switching the positioning device between a positioning state in which the bar is positioned and a non-positioning state in which positioning of the bar is unlocked, by adjusting a position of the positioning element on the connecting element.

In one exemplary embodiment, during the process of detecting a length of the bar, the bar may be rotated by a predetermined angle for a predetermined number of times.

In one exemplary embodiment, the step of rotating the bar by a predetermined angle for a predetermined number of times includes: reading a count displayed on the micrometer each time the bar is rotated by the predetermined angle and the micrometer is brought into contact an end face of the bar; and calculating an average value of the read counts after the bar is rotated for the predetermined number of times, and adding a length of the calibration bar to or subtracting the length of the calibration bar from the calculated average value to obtain the length of the bar.

The bar length detection tool and the method for detecting a length of a bar according to the present disclosure, a 360°-rotation of the bar can be achieved by providing needle bearings inside the first bracket and the second bracket, so as to achieve detection of a plurality of points on the end face of the bar, thereby reaching more accurate detection results.

### BRIEF DESCRIPTION OF THE FIGURES

Fig. 1 is a perspective view showing the bar length detection tool according to the embodiments of the present disclosure.
Fig. 2 is a structural schematic diagram of the bar length detection tool according to the embodiments of the present disclosure under a calibration state.
Fig. 3 is a structural schematic diagram of the bar length detection tool according to the embodiments of the present disclosure under a use state.

### DETAILED DESCRIPTION

The embodiments of the present disclosure are described hereinafter in detail, examples of which are illustrated in the accompanying drawings, wherein the same or similar reference signs indicate the same or similar elements or elements having the same or similar functions throughout the present disclosure. The embodiments described hereinbelow with reference to the drawings are illustrative and are used to explain the present disclosure only, which may not be interpreted as limitations to the present disclosure.

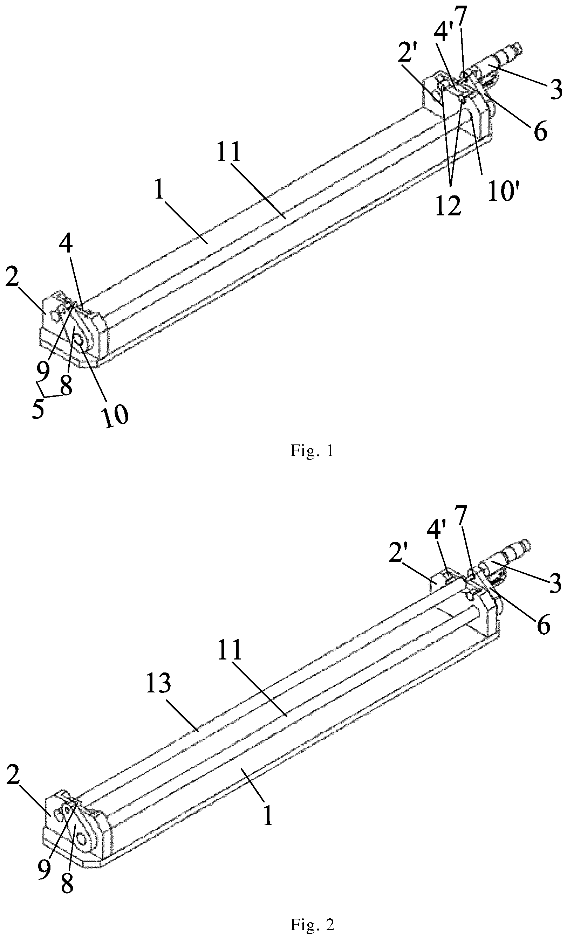

As shown in Fig. 1, a bar length detection tool according to the present disclosure includes a substrate 1, a first bearing seat 2 and a second bearing seat 2 that are oppositely disposed on the substrate 1, and a micrometer 3. A positioning device 5 is rotatably connected to the first bearing seat 2, a mounting plate 6 is rotatably connected to the second bearing seat 2', and the first bearing seat 2 and the second bearing seat 2' are each provided with at least two needle bearings 12. In one exemplary embodiment, the mounting plate 6 is connected to the micrometer 3. In one exemplary embodiment, the mounting plate 6 has a mounting hole 7 for insertion of the micrometer 3.

In one exemplary embodiment, the positioning device 5 includes a connecting element 8 rotatably mounted on an outside surface of the first bearing seat 2, and a positioning element 9 fixedly connected to the connecting element 8 and located at a side of the connecting element 8 facing the second bearing seat 2'. In one exemplary embodiment, for example, the connecting element 8 may be in a form of a connecting plate, the positioning element 9 may be in a form of a positioning pin.

It should be noted that besides the above structure, the positioning device 5 may also take other structural forms as long as the positioning state and the non-positioning state of the positioning device 5 can be realized. For example, the connecting element 8 may be designed to be stationary. Specifically, the connecting element 8 is fixed to an outside surface of the first bearing seat 2, and the positioning element 9 may be rotatably connected to the connecting element 8.

In order to improve the detection efficiency, in one exemplary example, the bar length detection tool further includes a guide rod 11, the first bearing seat 2 may be provided with a first through hole 10 and the second bearing seat 2' may be provided with a second through hole 10', the first through hole 10 and the second through hole 10' being coaxially arranged, the guide rod 11 may rotatably pass through the first through hole 10 and the second through hole 10'. One end of the guide rod 11 is fixedly connected to the connecting element 8, and the other end of the guide rod 11 is fixedly connected to the mounting plate 6. In one exemplary embodiment, the mounting plate 6 is provided with a mounting hole 7 for insertion of the micrometer 3. The positioning element 9 is on the same straight ling as an axis of the mounting hole 7. As such, only one of the connecting element 8 and the mounting plate 6 needs to be operated to rotate the other in synchronization, thus it is unnecessary to rotate the connecting element 8 and the mounting plate 6 separately. By doing so, the detection speed would be effectively increased, thereby improving the detection efficiency.

In one exemplary embodiment, the mounting hole 7 is a step hole with one side having a larger hole diameter located at a side of the mounting plate 6 facing away the second bearing seat 2'. In one exemplary embodiment, the bar length detection tool further includes a calibration bar 13, a first bracket 4 disposed on the first bearing seat 2 and a second bracket 4' disposed on the second bearing seat 2', and two ends of the calibration bar 13 are disposed inside the first bracket 4 and the second bracket 4', respectively. In one exemplary embodiment, for example, the first bracket 4 and the second bracket 4' may be arc-shaped grooves. In one exemplary embodiment, at least two needle bearings 12 are disposed inside the first bracket 4 and the second bracket 4'.

In one exemplary embodiment, in the structure in which the connecting element 8 and the positioning element 9 of the positioning device 5 are in fixed connection, the positioning device 5 may be switched between a positioning state in which the calibration bar 13, the bar (such as a target) 14 are positioned and a non-positioning state in which positioning of the calibration bar 13, the bar 14 is unlocked, by rotating the connecting element 8. In other words, fast positioning and fast unlocking of the calibration bar 13, the bar 14 may be achieved by rotating the connecting element 8.

Hereinafter, the method for detecting a length of the bar (such as a target) 14 using a bar length detection tool is described in detail with reference to the accompanying drawings. Prior to detecting a length for the bar 14 using a bar length detection tool, zero calibration is performed for the bar length detection tool. Specifically, as shown in Fig. 2, during zero calibration (i.e., the bar length detection tool is under a calibration state), at first, two ends of the calibration bar 13 are disposed inside the first bracket 4 and the second bracket 4', respectively, then the positioning device 5 is rotated, so as to limit (position) a position of the calibration bar 13 with the positioning device 5. After one end of the calibration bar 13 is limited by the positioning device 5, the micrometer 3 is adjusted such that the micrometer 3 comes into contact (fits) the other end of the calibration bar 13, so as to reset the micrometer 3.

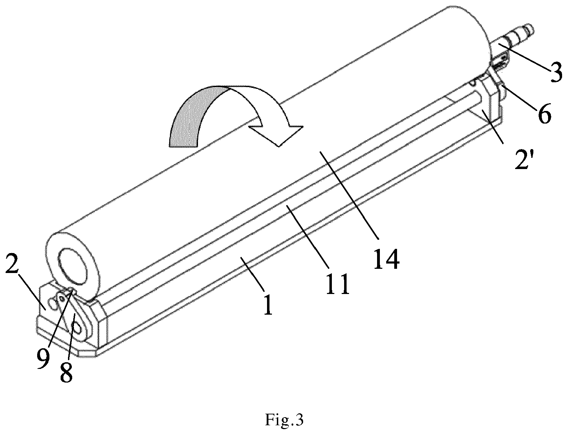

After zero calibration for the bar length detection tool is completed, the micrometer 3 is released and the calibration bar 13 is removed, then a length of the bar 14 is detected. As shown in Fig. 3, during the process of detecting length for the bar 14, the bar 14 to be detected is firstly mounted, that is, two ends of the bar 14 are disposed inside the first bracket 4 and the second bracket 4', respectively, and one end of the bar 14 is positioned using the positioning device 5. After one end of the bar 14 is positioned by the positioning device 5, coarse tuning and fine tuning are performed for the micrometer 3 such that the micrometer 3 comes into contact with the other end of the bar 14. At this time, a count displayed on the micrometer 3 is read. A size (length) of the calibration bar 13 is added to or subtracted from the obtained count so as to obtain an actual length of the bar 14.

In one exemplary embodiment, in the structure in which the connecting element 8 and the positioning element 9 of the positioning device 5 are in rotatable connection, the above method further includes: switching the positioning device 5 between the positioning state in which the bar 14 is positioned and the non-positioning state in which positioning of the bar 14 is unlocked by adjusting a position of the positioning element 9 on the connecting element 8. Specifically, when the positioning element 9 is adjusted to a first position on the connecting element 8, the positioning device 5 positions the calibration bar 13 or the bar 14 (positioning state); when the positioning element 9 is adjusted to a second position on the connecting element 8, the positioning of the calibration bar 13, the bar 14 is unlocked (non-positioning state).

As described above, the bar length detection tool and the method for detecting a length of a bar according to the present disclosure, a bar to be detected is supported through a first bearing seat and a second bearing seat, when installing the bar, two ends of the bar are placed into the first bracket of the first bearing seat and the second bracket of the second bearing seat, respectively, so as to achieve positioning of the bar, hence to effectively prevent the bar from dropping off the first bearing seat and the second bearing seat. Therefore, the bar length detection tool of the present disclosure can detect a length of a large-sized bar (such as a target) using a simple structure with high precision, thereby solving the problem of unprecise detection of a length of a large-sized bar (such as a target) in the prior art. In other words, the bar length detection tool and the method for detecting a length of a bar of the present disclosure can detect a length of a bar using a simple structure with high detection precision.

In addition, in the bar length detection tool according to the present disclosure, the mounting hole 7 is designed into a step hole to limit the position of the micrometer 3, so as to ensure that the position of the micrometer 3 remains the same each time as the micrometer 3 is mounted. In order to prevent the micrometer 3 from dropping off, a locking bolt may be provided on the mounting plate 6. By disposing needle bearings 12 inside the first bracket 4 and the second bracket 4', a 360°-rotation of the bar can be achieved. In such case, the above method may further include the following steps. Specifically, when performing length measurement, the bar is rotated at first by a predetermined angle, for example, by 60°, then the micrometer 3 is brought into contact with a position (point) on an end face of the target, and a count displayed on the micrometer 3 is read. Thereafter, the target is continuously rotated by a predetermined angle, for example, by 60°, such that the micrometer 3 is brought into contact with another position (point) on an end face of the bar, and a count displayed on the micrometer 3 is read. Repeating the process described above until the bar is rotated by a predetermined angle for six times (that is, the bar has been rotated by 360° and the micrometer 3 has contacted six different positions on the end face of the bar). An average of the six counts read in the above process is calculated, the size (length) of the calibration bar 13 is added to or subtracted from the calculated average to obtain an actual length of the bar 14. In one exemplary embodiment, as required, the predetermined angle may be, for example, 30°, 45°, 60°, 90° or 180°, ect., and the predetermined number of times of rotation may be 12 times, 8 times, 4 times or 2 times, etc. In addition, when performing length measurement, it is not necessary that the bar is rotated by 360°, for example, as required, the bar may also be rotated only by 120°, 150°, 180°, 210° or 240°, etc. As described above, the bar length detection tool according to the present disclosure, a 360°-rotation of the bar can be achieved by providing needle bearings inside the first bracket and the second bracket, so as to achieve detection of a plurality of points on the end face of the bar, thereby reaching more accurate detection results. That is to say, accuracy of measurement results is effectively improved.

In one exemplary embodiment, the substrate 1 and the calibration bar 13 may also be designed into a retractable structure, such that bars (or other bar materials) of different dimensions can be measured, and universal applicability of the present disclosure is achieved.

The foregoing description of the exemplary embodiment of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### LIST OF REFERENCE SIGNS

1. Substrate
2. First bearing seat
2'. Second bearing seat
3. Micrometer
4. First bracket
4'.Second bracket
5. Positioning device
6. Mounting plate
7. Mounting hole
8. Connecting element
9. Positioning element
10. First through hole
10'. Second through hole
11. Guide rod
12. Needle bearing
13. Calibration bar
14. Bar

## Claims

1. A bar length detection tool, comprising:
a substrate (1),
a first bearing seat (2) and a second bearing seat (2') oppositely disposed on the substrate (1),
and a micrometer (3);
wherein a positioning device (5) is rotatably connected to the first bearing seat (2), a mounting plate (6) is rotatably connected to the second bearing seat (2'), and the first bearing seat (2) and the second bearing seat (2') are each provided with at least two needle bearings (12).

2. The bar length detection tool according to claim 1, wherein the mounting plate (6) is connected to the micrometer (3).

3. The bar length detection tool according to claim 1, wherein the positioning device (5) comprises a connecting element (8), which is rotatably mounted on an outside surface of the first bearing seat (2), and
a positioning element (9), which is fixedly connected to the connecting element (8) and is positioned at a side of the connecting plate (8) facing the second bearing seat (2').

4. The bar length detection tool according to claim 3, further comprising:
a guide rod (11), the first bearing seat (2) having a first through hole (10), the second bearing seat (2') having a second through hole (10'), the first through hole (10) and the second through hole (10') being coaxially arranged, the guide rod (11) being rotatably inserted into the first through hole (10) and the second through hole (10'), one end of the guide rod (11) being fixedly connected to the connecting element (8), and the other end of the guide rod (11) being fixedly connected to the mounting plate (6).

5. The bar length detection tool according to claim 1, wherein the mounting plate (6) has a mounting hole (7) for insertion of the micrometer (3).

6. The bar length detection tool according to claim 3, wherein the positioning element (9) is on the same straight line as an axis of the mounting hole (7).

7. The bar length detection tool according to claim 5, wherein the mounting hole (7) is a step hole with one side having a larger hole diameter being located at a side of the mounting plate (6) facing away the second bearing seat (2').

8. The bar length detection tool according to claim 1, further comprising:
a calibration bar (13),
a first bracket (4) disposed on the first bearing seat (2), and
a second bracket (4') disposed on the second bearing seat (2'),
wherein two ends of the calibration bar (13) are provided inside the first bracket (4) and the second bracket (4'), respectively.

9. The bar length detection tool according to claim 8, wherein the first bracket (4) and the second bracket (4') are both arc-shaped grooves.

10. The bar length detection tool according to claim 8, wherein the at least two needle bearings (12) are provided inside the first bracket (4) and the second bracket (4').

11. A method for detecting a length of a bar (14) with a bar length detection tool, the bar length detection tool comprising:
a substrate (1), a first bearing seat (2) and a second bearing seat (2') oppositely disposed on the substrate (1) and provided with a first bracket (4) and a second bracket (4'), respectively, a micrometer (3), and a calibration bar (13); wherein a positioning device (5) is rotatably connected to the first bearing seat (2), a mounting plate (6) is rotatably connected to the second bearing seat (2'), and the first bearing seat (2) and the second bearing seat (2') are each provided with at least two needle bearings (12) therein, the method comprising:
disposing two ends of the calibration bar (13) inside the first bracket (4) and the second bracket (4'), respectively, and after positioning one end of the calibration bar (13) with the positioning device (5), adjusting the micrometer (3) such that the micrometer (3) comes into contact with the other end of the calibration bar (13), so as to reset the micrometer (3); and
releasing the micrometer (3), removing the calibration bar (13) and disposing the two ends of the bar (14) inside the first bracket (4) and the second bracket (4'), respectively, after positioning one end of the bar (14) with the positioning device (5), bringing the micrometer (3) into contact with the other end of the bar (14) and reading a count of the micrometer (3), and adding a length of the calibration bar (13) to or subtracting the length of the calibration bar (13) from the obtained count, so as to obtain a length of the bar (14).

12. The method according to claim 11, wherein the positioning device (5) comprises a connecting element (8), which is rotatably mounted on an outside surface of the first bearing seat (2), and
a positioning element (9), which is fixedly connected to the connecting element (8) and is positioned at a side of the connecting plate (8) facing the second bearing seat (2'), and
the method further comprising:
switching the positioning device (5) between a positioning state for positioning the bar (14) and a non-positioning state in which positioning of the bar (14) is unlocked, by adjusting a position of the positioning pin (9) on the connection plate (8).

13. The method according to claim 11, wherein when detecting a length of the bar (14), the bar (14) is rotated by a predetermined angle for a predetermined number of times.

14. The method according to claim 13, wherein the bar (14) is rotated by a predetermined angle for a predetermined number of times includes: reading a count displayed on the micrometer (3) each time the bar (14) is rotated by the predetermined angle and the micrometer (3) is brought into contact with an end face of the bar (14); and
calculating an average value of the read counts after the bar (14) is rotated for the predetermined number of times, and adding a length of the calibration bar (13) to or subtracting the length of the calibration bar (13) from the calculated average value, so as to obtain the length of the bar (14).
